Europäisches Patentamt

(19) **European Patent Office**

Office européen des brevets

(11) Publication number: **0 152 132**
A1

(12) # EUROPEAN PATENT APPLICATION

(21) Application number: **85200070.2**

(51) Int. Cl.⁴: **G 01 F 1/66**

(22) Date of filing: **24.01.85**

(30) Priority: **27.01.84 NL 8400265**

(43) Date of publication of application:
**21.08.85 Bulletin 85/34**

(84) Designated Contracting States:
**AT BE CH DE FR GB LI NL SE**

(71) Applicant: **N.V. Nederlandsche Apparatenfabriek NEDAP**
**Oude Winterswijkseweg 7**
**NL-7141 DE Groenlo(NL)**

(72) Inventor: **de Jong, Hendrik Johannes**
**Mesdagstraat 1**
**NL-7141 XJ Groenlo(NL)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **An ultrasonic flow meter.**

(57) An ultrasonic flow meter comprising a tubular housing containing two opposed transducers, in which, in operation, a flowing medium whose rate of flow is to be measured can be conducted through the housing. The transducers are each positioned coaxially within the housing adjacent one of the ends of the housing so that the connection line between the transducers extends parallel to the direction of flow of the medium in the tubular housing.

FIG.7

EP 0 152 132 A1

Title: An ultrasonic flow meter.

The present invention concerns an ultrasonic flow meter comprising a tubular housing containing two opposed transducers, in which, in operation, a flowing medium whose rate of flow is to be measured can be conducted through the housing.

Such ultrasonic flow meters are already known and are based on the phenomenon that sound is propagated more quickly in a flowing medium with the flow direction than against the flow direction. This difference in propagation speed can be measured and is indicative of the rate of flow of the medium. According to a known technique, for this purpose the two transducers are energized simultaneously for a short period of time so as to transmit a sound beam to the other transducer and subsequently they are changed over so as to intercept as a receiver the sound beam transmitted by the opposed transducer, converting the same into an electric signal.

By measuring the difference in transit time of both sound beams, or the phase differential of the electric signals, it is possible to establish the rate of flow of the medium.

A drawback of the prior art ultrasonic flow meters is that the transducers are disposed opposite one another in the wall of the tubular housing. As a result, the medium flow is intersected at an angle by the sound beams between the transducers, owing to which the known flow meters are not quite suitable for measuring relatively low rates of flow or small variations in the rate of flow; the sound beams, in fact, are influenced only by a component of the rate of flow.

It is an object of the present invention to eliminate the above drawback and to provide in general a sturdy and effective flow meter suitable for measuring low rates of flow and small variations in the rate of flow. To this end, according to the invention, a flow meter of the above described type is characterized in that the transducers are each positioned coaxially within the housing adjacent one of the ends of the housing, so that the connection line between the transducers extends parallel to the direction of flow of the medium in the tubular housing.

Some embodiments of the flow meter according to the invention will now be described, by way of example, with reference to the accompanying drawings, in which:

Fig. 1 shows a known flow meter;

Fig. 2 shows a first embodiment of a flow meter according to the present invention;

Fig. 3 shows a second embodiment of a flow meter according to the present invention;

Fig. 4 shows a preferred embodiment of a flow meter according to the present invention;

Figs. 5 and 6 show two embodiments of a transducer holder suitable for the flow meter shown in Fig. 4; and

Fig. 7 shows the flow meter shown in Fig. 4 in more detail.

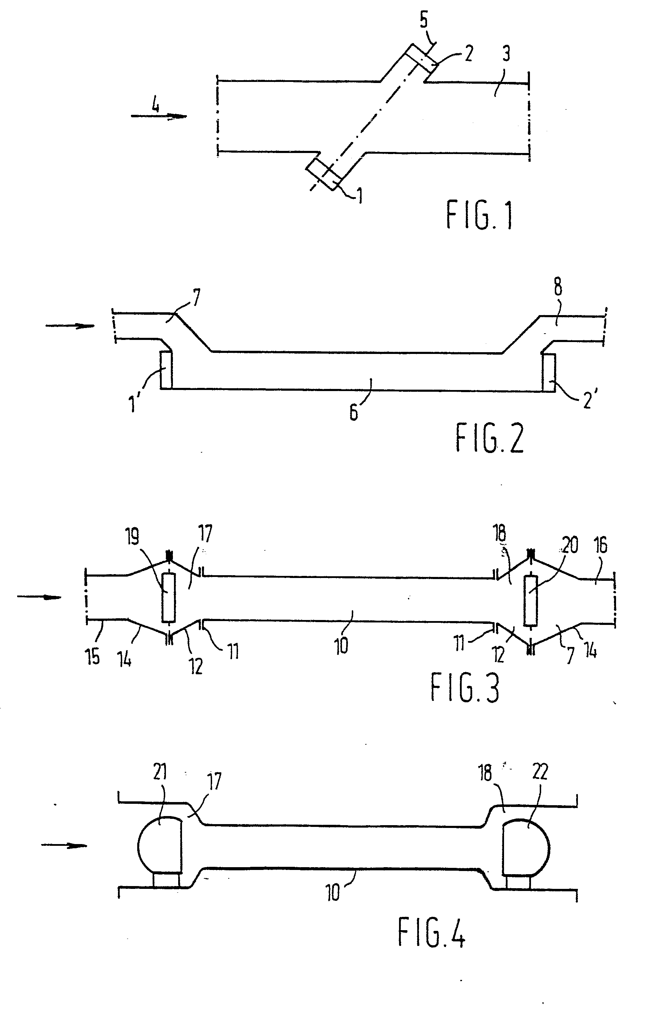

Fig. 1 shows a known flow meter having two transducers 1,2 positioned opposite one another in the wall of a tubular housing 3 shown in part. The fluid stream whose rate of flow is to be measured flows through the tubular housing 3, as shown by an arrow 4. The direction of propagation of the ultrasonic sound beams produced by suitable energization of the transducers is shown diagrammatically by the line 5.

The fluid stream is intersected at an angle by a sound beam from transducer 1 to transducer 2 and vice versa. These transducers may consist of plane parallel-sided plates of piezoelectric material operating in thickness-vibration mode. The sound beams are transmitted simultaneously by the transducers 1 and 2 functioning temporarily in the transmitting mode. Before the sound reaches the other side, both transducers are switched to the receiving mode. Then, the phase or transit time of the incoming signals is compared. As a matter of fact, a difference in phase or transit time will occur, since the sound beam from transducer 1 to transducer 2 is directed partly with the fluid stream and that from transducer 2 to transducer 1 partly against the fluid stream. The difference in phase or transit time is indicative of the rate of flow of the fluid stream. This construction is simple but not suitable for measuring relatively low rates of flow, since the sound beams are influenced only by a component of the rate of flow.

For measuring relatively small flows, the construction shown in Fig. 2 can be used. In this construction, the transducers 1' and 2' are each disposed at an end of a measuring tube 6, which adjacent its ends is provided with eccentric supply and discharge tubes 7,8. In principle, the operation is identical to that shown in Fig. 1. The sound beams, however, are here influenced by the entire rate of flow in the measuring tube 6, which has a constant diameter, so that the difference in phase or transit time of the incoming signals is increased. By moreover selecting a large distance between the transducers, which is simpler to accomplish in the configuration shown in Fig. 2 than in the meter shown in Fig. 1, there is also produced an increase in the said difference in phase or transit time, thereby producing a further shift of the sensitivity to lower rates of flow. Although, accordingly, the meter shown in Fig. 2 is an improvement over that shown in Fig. 1, the measuring tube 6 in Fig. 2 has no simple form, due to the presence of the necessary eccentric leads 7,8 and hence is expensive to manufacture.

The eccentric inflow of the medium in given ranges of flow rate could also produce nonlinearities of the meter indication. According to the invention, this can be prevented by causing the supply and discharge of the flowing medium to take place, as much as possible, in a rotationally symmetric way.

Such a flow meter is shown in Fig. 3. The meter comprises a measuring tube 10 having at its ends flanges 11 for attachment of flaring tube portions 12 provided at the wide ends with flanges 13 for attachment of tapering tube portions 14 which pass directly or by means of a flange attachment into tubes 15,16 traversed by the medium.

Instead of flange connections screw or clamping connections or the like may be used.

The flaring tube portions 12 together with the tapering tube portions 14 form a chamber 17,18 accommodating the transducers 19,20 coaxially with the measuring tube. The medium can thus flow about the transducers. The width of chambers 17,18 is determined by the maximally allowable flow resistance in the annular slot between transducers 19,20 and the inside of chambers 17,18 while the diameters of the transducers are preferably at least equal to the inner diameter of the measuring tube in order to achieve that the sound beam fills the entire measuring tube diameter.

In a further elaboration of the inventive idea the meter according to Fig. 3 can be further improved by an integral design of the measuring tube and the chambers 17, 18 accommodating the transducers. A major advantage of such a construction is that there are no stepwise material transitions from the measuring tube to the chambers, as might occur with screw or clamping connections. In fact, these may lead to acoustic reflections which adversely affect the measurement.

Such an improved construction wherein the chambers 17,18 accommodating the transducers are integral with the measuring tube 10 and the chambers extend beyond the transducers, is shown diagrammatically in Fig. 4.

In the preferred embodiment shown in Fig. 4, the transducers are positioned in specially formed housings 21, 22 having a low flow resistance. These housings should be completely impervious to the medium and the passage of the electric connections should be simple and reliable.

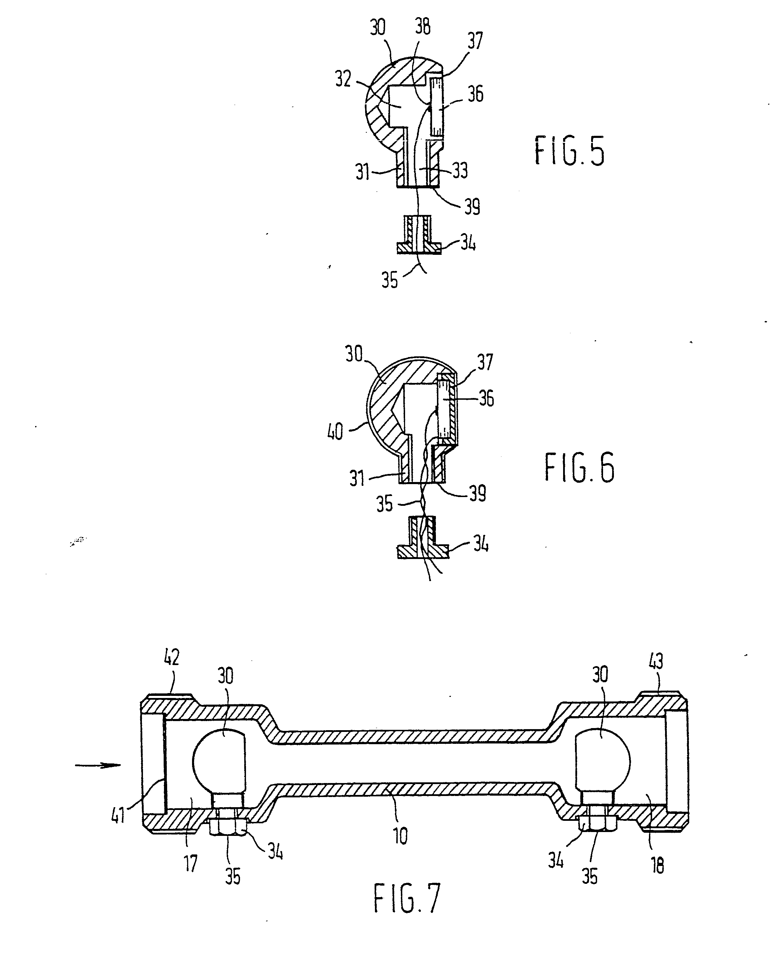

The housing for the transducers shown in Fig. 4 are shown in cross-section in more detail in Fig. 5. The housing 30 is substantially spherical and flattened on one side and is made of metal, e.g. brass or stainless steel. The housing 30 is hollow and open at the flattened side. Furthermore, the housing 30 comprises a foot 31 containing a bore 33 connected to the cavity 32 in the housing. A hollow bolt 34 can be screwed into the bore, by means of which bolt electric wires 35 can be conducted into the housing and which bolt also serves for mounting the housing in the chamber of the measuring tube.

The transducer 36, comprising a disc-shaped piezo-oxide thickness vibrator, is mounted in the cavity of the housing in such a manner that the outwardly oriented surface is flush with the flattened portion of the housing. The flattened portion is shut off by a diaphragm 37 and the transducer is attached on the inside to the diaphragm e.g. by means of adhesive. Said diaphragm is also made of metal, preferably, the same metal as that of the housing. The diaphragm can be connected to the housing e.g. by means of a projection or laser weld, thus producing an entirely tight construction. Transducer 36 is provided on both sides with an electrode: one 37 is connected via the (conductive) adhesive layer to the metal housing, the other 38 is conducted electrically in outward direction by means of an insulated wire 35. The base 39 of the foot is cylindrical and has the same radius of curvature as the chamber of the meter. Between the cylinder face and the wall of the chamber there may be provided a sealing agent.

An alternative transducer housing is shown in Fig. 6. Diaphragm 37 and housing 30 now consist of synthetic plastics material. The choice of the synthetic plastics material and the thickness of the diaphragm is such as to provide optimum acoustic adaptation to the medium to be measured. A drawback of synthetic plastics material is that it is not hermetrically tight and is always pervious to some quantity of medium. To eliminate these drawbacks, the housing and also the diaphragm are provided with an impervious, very thin metal layer 40, which is applied e.g. by means of an electroplating process.

Fig. 7 shows a meter according to Fig. 4 in more detail.

As shown in the preferred embodiment of Fig. 7, at least the supply end of the meter is provided with a filter 41 (e.g. metal gauze) having a mesh size at most the size of the smallest passage within the meter tube. As a result, not only are foreign particles prevented from getting stuck within the meter, thus disturbing the flow pattern, but moreover the turbulence behaviour of the fluid stream is homogenized even towards the area of low rates of flow, where the stream may become partly laminar, though in an unpredictable and fluctuating manner. This may result in non-linear behaviour of the flow meter. As shown in Fig. 7, the outwardly directed ends of chambers 17,18 are provided with attachment members 42,43 (e.g. screw thread or flange) for connection of the meter within a piping system.

CLAIMS:

1. An ultrasonic flow meter comprising a tubular housing containing two opposed transducers, in which, in operation, a flowing medium whose rate of flow is to be measured can be conducted through the housing, characterized in that the transducers are each positioned coaxially within the housing adjacent one of the ends of said housing so that the connection line between the transducers extends parallel to the direction of flow of the medium in the tubular housing.

2. An ultrasonic flow meter according to claim 1, characterized in that the tubular housing is provided adjacent its ends with an eccentric supply tube (7) and discharge tube (8), respectively, for the medium.

3. An ultrasonic flow meter according to claim 1, characterized in that the housing comprises a central measuring tube of constant diameter, which is provided on each end with a flaring and subsequently tapering tube portion attached to the corresponding tube end and extending in alignment with said measuring tube and which forms a chamber wherein a transducer is positioned coaxially, said transducer leaving an annular space all around through which the medium can enter or leave the measuring tube.

4. An ultrasonic flow meter according to claim 1, characterized in that the housing comprises a central measuring tube portion of constant diameter having on each end a portion of larger diameter integral therewith, the latter portion forming a chamber containing a transducer positioned coaxially with the measuring tube portion, which transducer leaves an annular space all around through which the medium can enter or leave the measuring tube portion, each larger diameter portion extending beyond the corresponding transducer and being provided at the end extending beyond the transducer with attachment means for mounting the flow meter in a piping system containing the medium.

5. An ultrasonic flow meter according to claim 4, characterized in that each transducer is mounted in a transducer housing disposed in the associated chamber, said housing comprising a foot and a hollow spherical portion connected thereto, said spherical portion being flattened and open at the flattened side, the said transducer being attached on the inside to a diaphragm disposed over the flattened side of the transducer housing.

6. An ultrasonic flow meter according to claim 5, characterized in that the foot is provided with a bore through which electric connection wires for the transducer can be conducted and that the foot is adapted for attachment to the chamber wall by means of a hollow bolt.

7. An ultrasonic flow meter according to claim 5, characterized in that the transducer housing is made of metal.

8. An ultrasonic flow meter according to claim 5, characterized in that the transducer housing is made of synthetic plastics material and is entirely enclosed by a metal layer.

9. An ultrasonic flow meter according to claim 1, characterized in that the flow meter is provided with a filter on at least one of its ends.

&&&&&

0152132

FIG.1

FIG.2

FIG.3

FIG.4

FIG.5

FIG.6

FIG.7

0152132

**European Patent Office**

**EUROPEAN SEARCH REPORT**

Application number

| | DOCUMENTS CONSIDERED TO BE RELEVANT | | EP 85200070.2 |

| Category | Citation of document with indication, where appropriate, of relevant passages | Relevant to claim | CLASSIFICATION OF THE APPLICATION (Int Cl 4) |
|---|---|---|---|
| X | DE - A - 2 339 631 (SARATOGA) <br> * Fig. 1-3 * <br> -- | 1-6 | G 01 F 1/66 |
| X | DE - B2 - 2 547 892 (DRÄGERWERK AG) <br> * Fig. 1 * <br> -- | 1,2 | |
| X | DE - A1 - 2 853 082 (BOSCH) <br> * Fig. 1 * <br> -- | 1,4 | |
| A | US - E - 29 785 (LESCHEK et al.) <br> * Fig. 1; abstract * <br> -- | 7 | |
| A | US - A - 4 333 352 (CONNERY et al.) <br> * Fig. 3; column 3, line 63 - column 4, line 3 * <br> -- | 8 | TECHNICAL FIELDS SEARCHED (Int. Cl 4) <br><br> G 01 F 1/00 |
| A | FR - A1 - 2 509 460 (CENTRO) <br> * Fig. 2,4 * <br> ---- | 9 | |

The present search report has been drawn up for all claims

| Place of search | Date of completion of the search | Examiner |
|---|---|---|
| VIENNA | 26-04-1985 | BURGHARDT |